# EUROPÄISCHE PATENTSCHRIFT

(11) **EP 0 859 681 B1**
(45) Veröffentlichungstag und Bekanntmachung des Hinweises auf die Patenterteilung: **14.07.1999**
(21) Anmeldenummer: 96945850.4
(22) Anmeldetag: 30.10.1996
(51) Int. Cl.: B23K 3/06

(54) **VORRICHTUNG ZUR APPLIKATION VON VERBINDUNGSMATERIALDEPOTS**
DEVICE FOR THE APPLICATION OF JOINT MATERIAL DEPOSIT
DISPOSITIF POUR APPLIQUER UN DEPOT DE MATERIAU D'ASSEMBLAGE

(30) Priorität: 10.11.1995 DE 19541996
(43) Veröffentlichungstag der Anmeldung: 26.08.1998
(73) Patentinhaber: Finn, David, 87629 Füssen-Weissensee (DE); Rietzler, Manfred, 87616 Marktoberdorf (DE)
(72) Erfinder: Finn, David, 87629 Füssen-Weissensee (DE); Rietzler, Manfred, 87616 Marktoberdorf (DE)
(74) Vertreter: Böck, Bernhard, Dipl.-Ing.
(86) Internationale Anmeldenummer: DE9602078
(87) Internationale Veröffentlichungsnummer: WO9717191

(56) Entgegenhaltungen:
- DE-A- 4 320 055
- US-A- 1 673 281
- US-A- 4 936 501
- US-A- 5 467 913
- IBM TECHNICAL DISCLOSURE BULLETIN, Bd. 32, Nr. 5a, Oktober 1989, NEW YORK US, Seiten 332-325, XP000048936 "SOLDER RING PLACEMENT FOR MULTIPLE PIN ELECTRICAL CONNECTOR"

## Beschreibung

Die vorliegende Erfindung betrifft eine Vorrichtung zur vereinzelten Applikation von Verbindungsmaterialdepots, insbesondere Lotkugeln, aus einem Verbindungsmaterialreservoir mit einer Applikationseinrichtung und einer Vereinzelungseinrichtung zur Vereinzelung von Verbindungsmaterialdepots aus dem Verbindungsmaterialreservoir.

Bei der singulären, auch unter dem Begriff "single-point"-Verfahren bekannten Applikation von Verbindungsmaterialdepots, erfolgt bislang die Vereinzelung der in einem Verbindungs-materialreservoir dargereichten Verbindungsmaterialdepots durch eine vereinzelte Aufnahme der Verbindungsmaterialdepots mittels der Applikationseinrichtung, die nach Art einer Pick-and-Place-Einrichtung betrieben wird. Hierzu ist es erforder-lich, die Applikationseinrichtung zum Materialreservoir hinzu-führen, dort ein Verbindungsmaterialdepot zu entnehmen und dieses anschließend zur Verbindungsstelle zu überführen und dort zu plazieren. Aufgrund der vorstehenden kurzen Schilde-rung des bekannten Verfahrens wird deutlich, daß die zur Applikation eines vereinzelten Verbindungsmaterialdepots auf einer Verbindungsstelle benötigte Zeit im wesentlichen durch die für die Vereinzelung der Verbindungsmaterialdepots notwendigen Zustellbewegungen der Applikationseinrichtung bedingt ist. Aus naheliegenden Gründen eignet sich das bekannte, zeitaufwendige Applikationsverfahren zur Applikation vereinzelter Verbindungsmaterialdepots nicht für einen gewerblichen oder gar industriellen Einsatz.

Aus der DE-A-4 320 055 ist eine Vorrichtung zur vereinzelten Applikation von Lotkugeln aus einem Verbindungsmaterialreservoir mit einer Applikationseinrichtung und einer als Fördereinrichtung ausgebildeten Vereinzelungseinrichtung bekannt, die zur Förderung von aus dem Verbindungsmaterialreservoir vereinzelten Lotkugeln an die Applikationseinrichtung dient. Bei der bekannten Vorrichtung ist die Fördereinrichtung als Schwerkraftfördereinrichtung ausgebildet.

Aus der US-A-4 936 501 ist eine Lötpistole bekannt, die zum Auftrag aus einem Verbindungsmaterialreservoir vereinzelter Lötkugeln in verflüssigtem Zustand dient. Auch diese Vorrichtung ist zur Förderung der aus dem Verbindungsmaterialreservoir vereinzelter Lotkugeln an die Applikationseinrichtung mit einer Schwerkraftfördereinrichtung versehen.

Der vorliegenden Erfindung liegt die Aufgabe zugrunde, eine Vorrichtung vorzuschlagen, die die Durchführung einer kontinuierlichen und taktgenauen Applikation vereinzelter Verbindungsmaterialdepots ermöglicht.

Diese Aufgabe wird durch eine Vorrichtung mit den Merkmalen des Anspruchs 1 gelöst.

Bei der erfindungsgemäßen Vorrichtung ist die Vereinzelungseinrichtung als Kreisfördereinrichtung ausgebildet, so daß eine Anordnung der Transportaufnahmen mit regelmäßiger Teilung möglich ist, die einen getakteten Betrieb der Applikationseinrichtung ermöglicht.

Bei einer bevorzugten Ausführungsform weist die Vereinzelungseinrichtung entsprechend der Größe der zu vereinzelnden Verbindungsmaterialdepots ausgebildete Transportaufnahmen auf, die von einer Aufnahmeposition zur vereinzelten Aufnahme von Verbindungsmaterialdepots aus dem Verbindungsmaterialreservoir in eine Abgabeposition zur Abgabe der Verbindungsmaterialdepots an die Applikationseinrichtung bewegbar sind. Hierdurch ist es möglich, der Applikationseinrichtung die vereinzelten Verbindungsmaterialdepots mit definiertem Abstand voneinander zuzuführen, so daß auch bei größerer Entfernung zwischen dem Verbindungsmaterialreservoir und der Applikationseinrichtung sich die Zeit zur Übergabe eines Verbindungsmaterialdepots an die Applikationseinrichtung auf die Zeit zur Überwindung des Abstands zwischen zwei Transportaufnahmen reduziert.

Wenn die Vereinzelungseinrichtung und die Applikationseinrichtung in einer baulichen Einheit zusammengefaßt sind, läßt sich die Vorrichtung nicht nur stationär angeordnet betreiben, wobei dann die mit der Verbindungsmaterialdepotapplikation zu versehenden Verbindungsstellen an der Applikationseinrichtung vorbei bewegt werden, sondern darüber hinaus auch ein- oder mehrachsig bewegbar ausbilden, so daß die Vorrichtung nach Art eines Bondkopfes relativ zu den auf Substraten oder dergleichen vorgesehenen Verbindungsstellen bewegt werden kann.

Wenn neben der Vereinzelungseinrichtung und der Applikationseinrichtung auch das Verbindungsmaterialreservoir Teil derselben baulichen Einheit ist, läßt sich die freie Bewegbarkeit der gesamten Vorrichtung noch weiter verbessern.

In einer besonders vorteilhaften Ausführungsform ist die Vereinzelungseinrichtung als Scheibenförderer ausgebildet mit einer entsprechend der Transportaufnahmenteilung getaktet angetriebenen Förderscheibe. Hierdurch lassen sich die vorstehend beschriebenen vorteilhaften Wirkungen der Vorrichtung auf besonders einfache konstruktive Art und Weise realisieren.

Wenn die Verbindungsmaterialdepots in ihrer Abgabeposition in eine Applikationskapillare überführt werden, die zur Plazierung des Verbindungsmaterialdepots an einer Verbindungsstelle dient, wird eine mit einfachsten Mitteln zu realisierende Übergabe und Plazierung des Verbindungsmaterialdepots an bzw. auf der Verbindungsstelle ermöglicht, die in der einfachsten Ausführung lediglich schwerkraftbetätigt erfolgen kann.

Darüber hinaus besteht jedoch auch die Möglichkeit, zur Unterstützung der Überführung des jeweiligen Verbindungsmaterialdepots in die Applikationskapillare bzw. an die Verbindungsstelle eine auf das Verbindungsmaterialdepot wirkende Gasdruckbeaufschlagungseinrichtung vorzusehen.

Insbesondere dann, wenn es sich bei dem in der Gasdruckbeaufschlagungseinrichtung verwendeten Gas um ein Schutzgas handelt, kann das Gas nicht nur zur Druckbeaufschlagung des Materialdepots, sondern darüber hinaus auch zur Schaffung einer inerten Atmosphäre bei Durchführung einer thermischen Verbindung zwischen dem Verbindungsmaterialdepot und der Verbindungsstelle dienen.

Als vorteilhaft erweist es sich auch, wenn in Förderrichtung der Vereinzelungseinrichtung vor der Abgabeposition ein Sensor zur Detektierung von Verbindungsmaterial angeordnet ist. Hierdurch kann sicher überprüft werden, ob tatsächlich ein Verbindungsmaterialdepot zur Applikation auf der Verbindungsstelle mittels der Applikationseinrichtung zur Verfügung steht.

Wenn darüber hinaus in Förderrichtung der Vereinzelungseinrichtung hinter der Abgabeposition ein Sensor zur Detektierung von Verbindungsmaterial angeordnet ist, kann sicher festgestellt werden, ob tatsächlich eine Applikation des an die Applikationseinrichtung übergebenen Verbindungsmaterialdepots erfolgt ist.

Wenn die Applikationseinrichtung mit einer Energieeinrichtung zur Erzeugung der für eine Verbindung eines Verbindungsmaterialdepots mit der Verbindungsstelle notwendigen Energie verbunden ist, die in Abhängigkeit von dem durch die Gasdruckbeaufschlagungseinrichtung bewirkten Gasdruck ausgelöst wird, kann der zur Übergabe des Materialdepots an die Applikationseinrichtung unterstützend eingesetzte Gasdruck gleichzeitig auch zur Auslösung der Energieeinrichtung genutzt werden. Damit wird zum einen eine gesonderte Auslöseeinrichtung überflüssig. Zum anderen ist sichergestellt, daß eine Auslösung der Energieeinrichtung tatsächlich nur dann erfolgt, wenn infolge des als Druckwiderstand wirkenden Verbindungsmaterialdepots ein statischer Überdruck in der Applikationskapillare aufgebaut wird. Die Auslösung erfolgt also tatsächlich nur dann, wenn ein Verbindungsmaterialdepot zur Applikation an der Verbindungsstelle zur Verfügung steht. Fehlauslösungen der Energieeinrichtung sind somit ausgeschlossen.

Wenn die Applikationseinrichtung zur Verbindung mit einer Laserquelle zur Erzeugung der für eine Verbindung eines Verbindungsmaterialdepots mit der Verbindungsstelle notwendigen Energie eine in die Applikationskapillare mündende Lichtleitfaser aufweist, läßt sich die vorstehend beschriebene Art der Auslösung der Energieeinrichtung besonders vorteilhaft zur Auslösung eines einzelnen oder einer Reihe von Laserpulsen nutzen. Unabhängig von der Art der Auslösung der Energieeinrichtung erweist sich der Einsatz einer Laserquelle als Energieeinrichtung als besonders vorteilhaft, da hierbei auf besonders einfache Art und Weise die zur Erzeugung der Energie notwendigen Einrichtungen separat von der Vorrichtung angeordnet sein können und lediglich eine die Bewegbarkeit der Vorrichtung nicht einschränkende Verbindung zur Laserquelle über die Lichtleitfaser notwendig ist.

Darüber hinaus weist die Laserbeaufschlagung den Vorteil auf, daß keine relativ zu den sonstigen Einrichtungen der Vorrichtung bewegbaren Elemente notwendig sind. Hierdurch wird insgesamt ein besonders einfacher konstruktiver Aufbau der Vorrichtung möglich.

Wenn zur Überführung eines Verbindungsmaterialdepots aus der Abgabeposition in die Applikationskapillare eine schräg nach unten verlaufende Zuführkapillare vorgesehen ist, ist es möglich, den Endquerschnitt der Lichtleitfaser an der Vereinzelungseinrichtung vorbeigeführt im Bereich des Mundstücks der Applikationskapillare anzuordnen, um bei einem in der Applikationskapillare angeordneten und auf der betreffenden Verbindungsstelle aufliegenden Verbindungsmaterialdepot einen möglichst geringen Fokussierungsabstand zwischen dem Lichtleitfaserendquerschnitt und dem Verbindungsmaterialdepot zu haben.

Nachfolgend werden bevorzugte Ausführungsformen der erfindungsgemäßen Vorrichtung anhand der Zeichnungen näher erläutert. Es zeigen:
- **Fig. 1**: einen teilweise im Schnitt dargestellten Depotapplikator in einer ersten Ausführungsform;
- **Fig. 2**: eine Schnittdarstellung des in **Fig. 1** dargestellten Depotapplikators gemäß Schnittlinienverlauf II-II in **Fig. 1**;
- **Fig. 3**: eine teilweise Schnittdarstellung eines Depotapplikators in einer zweiten Ausführungsform;
- **Fig. 4**: eine mit X bezeichnete vergrößerte Detaildarstellung des in **Fig. 3** dargestellten Depotapplikators.

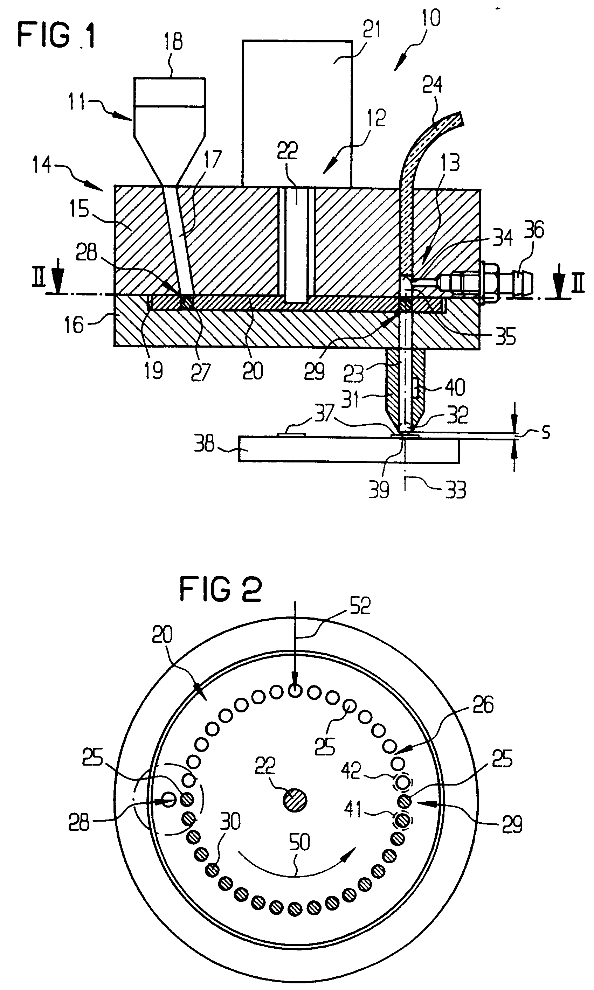

**Fig. 1** zeigt einen Depotapplikator 10 mit einem verbindungsmaterialreservoir 11, einer Vereinzelungseinrichtung 12 und einer Applikationseinrichtung 13.

Bei dem in **Fig. 1** dargestellten Depotapplikator 10 sind das Verbindungsmaterialreservoir 11, die Vereinzelungseinrichtung 12 und die Applikatoreinrichtung 13 zu einer baulichen Einheit zusammengefaßt und in bzw. an einem gemeinsamen Gehäuse 14 angeordnet. Das Gehäuse 14 weist im vorliegenden Fall ein Gehäuseoberteil 15 und ein Gehäuseunterteil 16 auf. Das Verbindungsmaterialreservoir 11 besteht aus einem im Gehäuseoberteil 15 ausgebildeten Steigkanal 17 und einem in den Steigkanal 17 einmündenden, auf dem Gehäuseoberteil 15 montierten Vorratstrichter 18. Der Steigkanal 17 mündet in einen im Gehäuseunterteil 16 ausgebildeten Aufnahmeraum 19 zur Aufnahme einer Förderscheibe 20, die zusammen mit einem Antriebsmotor 21 die Vereinzelungseinrichtung 12 bildet. Die Förderscheibe 20 ist über eine Antriebswelle 22, die durch das Gehäuseoberteil 15 verläuft, mit dem Antriebsmotor 21 verbunden, der auf der Oberseite des Gehäuseoberteils 15 angeflanscht ist.

Gegenüberliegend dem Verbindungsmaterialreservoir 11 und ebenfalls wie dieses im Umfangsbereich der Förderscheibe 20 angeordnet befindet sich die Applikationseinrichtung 13, die eine Applikationskapillare 23 und eine hier als Lichtleitfaser 24 ausgebildete Energiebeaufschlagungseinrichtung aufweist, die Bestandteil einer hier nicht im einzelnen dargestellten Lasereinrichtung ist.

Aus der in **Fig. 2** dargestellten Draufsicht der Förderscheibe 20 wird deutlich, daß diese eine Vielzahl, in gleichmäßiger Teilung angeordneter Transportaufnahmen 25 auf einem Aufnahmeteilkreis 26 aufweist. Wie durch den Drehrichtungspfeil 50 angegeben, wird die Förderscheibe 20 im vorliegenden Fall entgegen dem Uhrzeigersinn durch den Antriebsmotor 21 angetrieben. Dabei erfolgt der Antrieb schrittweise getaktet, so daß sich bei einem Stillstand der Förderscheibe 20 jeweils eine Transportaufnahme 25 in Überdeckung mit einer Ausgabeöffnung 27 des Steigkanals 17 und in Überdeckung mit der Applikationskapillare 23 der Applikationseinrichtung 13 befindet. Dabei wird im folgenden die Überdeckungslage einer Transportaufnahme 25 mit der Ausgabeöffnung 27 des Steigkanals 17 als Aufnahmeposition 28 und die Überdeckungslage einer Transportaufnahme 25 mit der Applikationskapillare 23 als Abgabeposition 29 bezeichnet.

Wie aus den **Fig. 1** und 2 deutlich wird, werden in dem Verbindungsmaterialreservoir 11 ungeordnet aufgenommene Verbindungsmaterialdepots 30 in der Aufnahmeposition 28 durch Aufnahme in den Transportaufnahmen 25 von der Förderscheibe 20 vereinzelt aufgenommen. Infolge der Drehbewegung (Pfeil 50) der Förderscheibe 20 werden die derart in der Förderscheibe 20 aufgenommenen Verbindungsdepots 30 in Richtung auf die Applikationseinrichtung 13 vorbewegt und in der Abgabeposition 29 an diese übergeben. **Fig. 2** macht deutlich, daß in dem Maße, wie die Verbindungsmaterialdepots 30 in der Aufnahmeposition 28 an die Förderscheibe 20 übergeben werden, infolge der Drehbewegung (Pfeil 50) der Förderscheibe 20 die Verbindungsmaterialdepots 30 an die Applikationseinrichtung 13 in der Abgabeposition 29 übergeben werden. Daher stellt sich bei einem kontinuierlichen Betrieb der Vereinzelungseinrichtung 12 die in **Fig. 2** dargestellte stationäre Befüllung der Förderscheibe 20 über den halben Aufnahmeteilkreis 26 reichend ein.

**Fig. 1** zeigt, daß die Applikationskapillare 23 der Applikationseinrichtung 13 mit einem Kapillarenmundstück 31 versehen ist, das zur Plazierung eines in **Fig. 1** mit gestricheltem Linienverlauf in einer Applikationsposition 32 dargestellten Verbindungsmaterialdepots 30 dient. In den dem Kapillarenmundstück 31 gegenüberliegenden Endbereich der Applikationskapillare 23 ist die Lichtleitfaser 24 derart eingeführt, daß sie mit der Applikationskapillare 23 koaxial und hinsichtlich einer Austrittsstrahlrichtung 33 im wesentlichen fluchtend angeordnet ist. Bei dem in **Fig. 1** dargestellten Depotapplikator 10 ist die Lichtleitfaser 24 mit ihrem Laserstrahlung emittierenden Endquerschnitt 34 oberhalb der Förderscheibe 20 angeordnet. Dabei befindet sich zwischen der Förderscheibe 20 und dem Endquerschnitt 34 ein Kapillarenfreiraum 35, in den ein Druckgasanschluß 36 mündet.

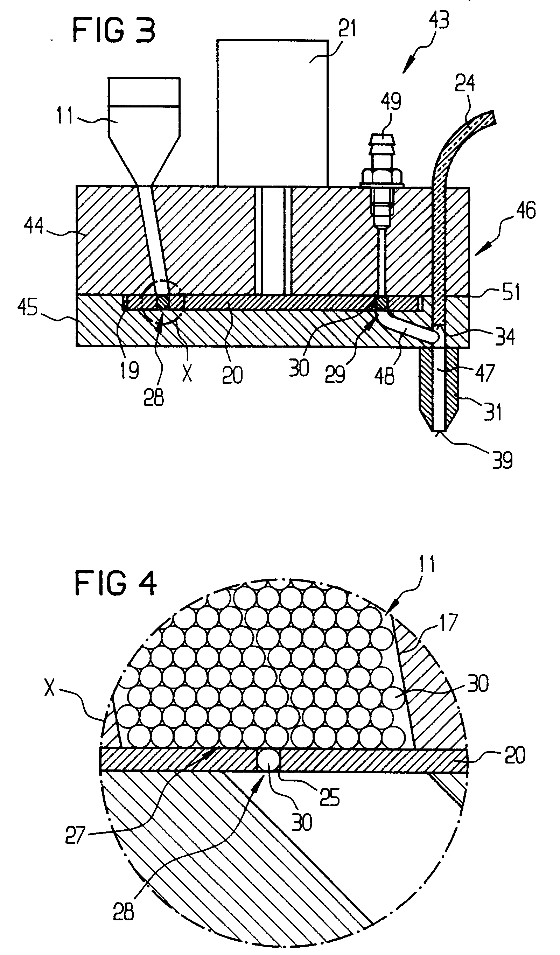

Der Druckgasanschluß 36 dient zur Beaufschlagung des Kapillarenfreiraums 35 mit erhöhtem Druck, so daß das in der Abgabeposition 29 angeordnete Verbindungsmaterialdepot 30 aus der als Durchgangsbohrung ausgebildeten Transportaufnahme 25 herausgetrieben wird und in die in **Fig. 1** mit gestricheltem Linienverlauf dargestellte Applikationsposition 32 überführt wird. In der Applikationsposition 32 liegt das Verbindungsmaterialdepot 30 auf einer Anschlußfläche 37 eines etwa als Chip 38 ausgebildeten Substrats auf. Dabei besteht zwischen einem Endquerschnitt 39 des Kapillarenmundstücks 31 und der oberfläche der Anschlußfläche 37 ein Spalt s, der so bemessen ist, daß einerseits das Verbindungsmaterialdepot 30 in der dargestellten Applikationsposition 32 sicher gehalten wird, und andererseits ausreichend ist, um eine im wesentlichen ungehinderte thermische Verformung des Verbindungsmaterialdepots 30 zur Ausbildung einer nicht näher dargestellten, fachsprachlich unter dem Begriff "Bump" bekannten, erhöhten Kontaktmetallisierung zu ermöglichen. Auf diese Art und Weise können mit dem Depotapplikator 10 bzw. dem Depotapplikator 43 (**Fig. 3**) Bumps hergestellt werden, wie sie zur Durchführung von "Flip-Chip"-Kontaktierungen benötigt werden.

Neben der Überführung des Verbindungsmaterialdepots 30 aus der Abgabeposition 29 in die Applikationsposition 32 dient die Druckgasbeaufschlagung des Verbindungsmaterialdepots 30 auch zur Auslösung der Lasereinrichtung. Hierzu ist bei dem in **Fig. 1** dargestellten Ausführungsbeispiel im Kapillarenmundstück 31 ein Drucksensor 40 vorgesehen, der einen statischen Überdruck in der Applikationskapillare 23 erfaßt. Da sich ein statischer Überdruck in der Applikationskapillare 23 nur dann aufbaut, wenn der Spalt s durch das in der Applikationsposition 32 angeordnete Verbindungsmaterialdepot 30 im wesentlichen verschlossen ist, erfolgt auch eine Auslösung der Lasereinrichtung nur dann, wenn ein Verbindungsmaterialdepot 30 auf der Anschlußfläche 37 plaziert ist. Vor der Plazierung kann gegebenenfalls noch eine Zustellbewegung des Kapillarenmundstücks in vertikaler Richtung erfolgen.

Eine andere Art zur Überprüfung des Vorhandenseins eines Verbindungsmaterialdepots 30 in der Applikationskapillare 23 besteht darin, eine vom Verbindungsmaterialdepot 30 verursachte Beeinflussung der aus der Lichtleitfaser 24 emittierten Laserstrahlung zu erfassen. Hierzu kann die Reflexion der Strahlung oder etwa auch eine durch das Verbindungsmaterialdepot 30 verursachte Wellenlängenänderung der Strahlung erfaßt werden.

Vor der Applikation des Verbindungsmaterialdepots kann eine Vorbehandlung der Verbindungsstelle, also hier der Anschlußfläche 37, erfolgen, um etwa etwaige Oxidschichten von der Verbindungsstelle zu entfernen. Für eine derartige Vorbehandlung kann mittels der Lichtleitfaser 24 eine Laserstrahlung geeigneter Wellenlänge und Pulsung auf die Verbindungsstelle gerichtet werden.

Wie in **Fig. 2** angedeutet, befinden sich jeweils um eine Teilung auf dem Aufnahmeteilkreis 26 von der Abgabeposition 29 entfernt ein Sensor 41 und 42 zur Detektierung von Verbindungsmaterial. Dabei befindet sich der Sensor 41 in Drehrichtung (Pfeil 50) der Förderscheibe 20 vor der Abgabeposition 29 und der Sensor 42 hinter der Abgabeposition 29. Beide Sensoren 41, 42 sind im Gehäuseunterteil 16 unmittelbar gegenüberliegend dem Aufnahmeteilkreis 26 angeordnet. Der Sensor 41 ermöglicht somit die Feststellung, ob eine Transportaufnahme 25 zur nachfolgenden Übergabe eines Verbindungsmaterialdepots 30 an die Applikationskapillare in der Abgabeposition 29 befüllt ist. Der Sensor 42 überprüft, ob das Verbindungsmaterialdepot 30 tatsächlich an die Applikationskapillare übergeben wurde. Somit dienen die Sensoren 41, 42 zur Feststellung von Fehlfunktionen, so daß im Fall der Feststellung einer nicht befüllten Transportaufnahme 25 durch den Sensor 41 die Förderscheibe 20 um eine Teilung weitergetaktet werden kann. Dasselbe gilt für den Fall, daß vom Sensor 42 nach Überschreiten der Abgabeposition 29 ein Verbindungsmaterialdepot 30 in der Transportaufnahme 25 detektiert wird.

**Fig. 3** zeigt einen zum großen Teil mit dem in **Fig. 1** dargestellten Depotapplikator 10 gleich ausgebildeten Depotapplikator 43, der wie der Depotapplikator 10 eine Förderscheibe 20 enthält, die in einem Aufnahmeraum 19 zwischen einem Gehäuseoberteil 44 und einem Gehäuseunterteil 45 angeordnet ist. Wie bei dem in **Fig. 1** dargestellten Depotapplikator 10 bilden benachbarte Oberflächen des Gehäuseoberteils 44 und des Gehäuseunterteils 45 Begrenzungsflächen für die in als Durchgangsbohrungen ausgebildeten Transportaufnahmen 25 aufgenommenen Verbindungsmaterialdepots 30, so daß diese während ihrer Förderung in der Förderscheibe 20 von der Aufnahmeposition 28 bis in die Abgabeposition 29 gegen Herausfallen gesichert sind.

Um eine Relativbewegung zwischen der Förderscheibe 20 und den angrenzenden Gehäuseteilen 15, 16 zu ermöglichen, ist jeweils zwischen den gegenüberliegenden Oberflächen der Förderscheibe 20 und dem Gehäuseoberteil 15 bzw. dem Gehäuseunterteil 16 ein in den **Fig. 1** und **3** nicht näher dargestellter Spalt vorgesehen. Zur Einstellung dieses Spaltes dient im wesentlichen ein flanschartig ausgebildeter Gehäusebund 51 am Gehäuseunterteil 16 bzw. 45. Um unabhängig von der Dicke der eingesetzten Förderscheibe 20 auch bei unterschiedlichen Förderscheiben 20 stets einen konstanten Spalt zwischen den gegenüberliegenden Oberflächen der Förderscheibe 20 und dem Gehäuseoberteil 15, 44 bzw. dem Gehäuseunterteil 16, 45 zu garantieren, ist es möglich, den Gehäusebund 51 abweichend von der Darstellung in **Fig. 3** in der Höhe entsprechend dem beabsichtigten Spaltmaß auszuführen und den notwendigen Abstand zwischen dem Gehäuseoberteil 44 und dem Gehäuseunterteil 45 zur Ausbildung des Aufnahmeraums 19 dadurch auszubilden, daß konzentrisch mit der Förderscheibe 20 ein hier nicht näher dargestellter, zusammen mit der Förderscheibe 20 aus demselben Materialzuschnitt hergestellter Distanzring zwischen dem Gehäuseoberteil 44 und dem Gehäuseunterteil 45 eingefügt wird. Die Herstellung des Distanzrings aus demselben Materialzuschnitt wie die Förderscheibe garantiert, daß die Förderscheibe 20 und der Distanzring eine identische Dicke aufweisen.

**Fig. 4** zeigt in einer vergrößerten Darstellung die Aufnahme eines Verbindungsmaterialdepots 30 aus dem Verbindungsmaterialreservoir 11 durch die Förderscheibe 20 in der Aufnahmeposition 28. Die im Steigkanal 17 des Verbindungsmaterialreservoirs 11 eng aneinanderliegend angeordneten Verbindungsmaterialdepots 30 werden unter Schwerkrafteinfluß in die in Überdeckung mit der Ausgangsöffnung 27 des Steigkanals 17 angeordnete Transportaufnahme 25 übergeben. Zur Unterstützung der Übergabe kann die Förderscheibe 20 oder ein Teil des Verbindungsmaterialreservoirs 11 mit Ultraschall beaufschlagt werden, so daß bei ungünstiger Relativpositionierung der Verbindungsmaterialdepots 30 im Steigkanal 17 ein die Befüllung der Transportaufnahme 25 behinderndes Verkanten von Verbindungsmaterialdepots 30 verhindert werden kann. Eine derartige Ultraschallbeaufschlagung ist auch möglich durch unmittelbare Beaufschlagung der Verbindungsmaterialdepots 30, beispielsweise mittels einer in den Steigkanal 17 hineinreichenden Ultraschallsonde.

Im Unterschied zu dem in **Fig. 1** dargestellten Depotapplikator 10 weist der Depotapplikator 43 eine modifizierte Applika-tionseinrichtung 46 auf, bei der die Verbindungsmaterialdepots 30 nicht unmittelbar aus der Abgabeposition 29 in eine Applikationskapillare 47 übergeben werden, sondern ausgehend von der Abgabeposition 29 zunächst in eine schräg nach unten verlaufende, in die Applikationskapillare 47 einmündende Zuführkapillare 48 gelangen.

Wie aus **Fig. 3** deutlich wird, wird hierdurch erreicht, daß die Applikationskapillare 47 mit der darin einmündenden Lichtleitfaser 24 seitlich an der Förderscheibe 20 vorbei geführt werden kann. Dies hat zur Folge, daß der Endquerschnitt 34 der Lichtleitfaser 24 näher an den Endquerschnitt 39 des Kapillarenmundstücks 31 herangeführt werden kann, so daß ein kürzerer Abstand zwischen dem Endquerschnitt 34 und dem in der Applikationsstellung 32 auf der Anschlußfläche 37 angeordneten Verbindungsmaterialdepot 30 (**Fig. 1**) einstellbar ist. Hierdurch wird eine größere Schmelzleistung beim Umschmelzen des Verbindungsmaterialdepots 30 mittels Laserenergie möglich.

Um auch bei dem in **Fig. 3** dargestellten Depotapplikator 43 die im Zusammenhang mit der Beschreibung des Depotapplikators 10 ausführlich erläuterten Vorteile einer Druckgasbeaufschlagung nutzen zu können, befindet sich bei dem Depotapplikator 43 ein Druckgasanschluß 49 oberhalb der Förderscheibe 20 und ermöglicht eine unmittelbare Druckgasbeaufschlagung des in der Abgabeposition 29 angeordneten Verbindungsmaterialdepots 30.

Zwar dienen die dargestellten Ausführungsformen des Depotapplikators zur Applikation von stückigen, hier kugelförmigen Verbindungsmaterialdepots 30, also etwa Lotkugeln. Jedoch ist der Depotapplikator unabhängig von der Ausführungsform nicht auf die Verwendung massiver oder stückiger Verbindungsmaterialdepots beschränkt. Vielmehr ist auch die Verwendung flüssiger oder viskoser Verbindungsmaterialdepots möglich, wobei dann zweckmäßigerweise bei der Übergabe aus dem Verbindungsmaterialreservoir an die Vereinzelungseinrichtung eine Portionierung erfolgt.

Insbesondere bei Verwendung eines Depotapplikators 10 oder 43 zur Applikation flüssiger oder viskoser Verbindungsmaterialdepots ist es vorteilhaft, wenn an einer, wie in **Fig. 2** durch den Pfeil 52 angedeuteten, Stelle zwischen der Abgabeposition 29 und der Aufnahmeposition 28 im Bereich der unbefüllten Förderscheibe 20 eine hier nicht näher dargestellte Reinigungseinrichtung vorgesehen wird. Diese Reinigungseinrichtung kann ähnlich wie die Applikationseinrichtung 13 oder 46 ausgeführt sein mit einem Druckgasanschluß zum Freiblasen nicht vollständig geleerter Transportaufnahmen 25 und gegebenfalls zusätzlich einer Lichtleitfaser, die mittels Laserbeaufschlagung der Transportaufnahmen 25 ein "Freibrennen" zugesetzter Transportaufnahmen 25 ermöglicht.

## Patentansprüche

1. Vorrichtung zur vereinzelten Applikation von Verbindungsmaterialdepots, insbesondere Lotkugeln, aus einem Verbindungsmaterialreservoir mit einer Applikationseinrichtung und einer Vereinzelungseinrichtung zur Vereinzelung von Verbindungsmaterialdepots aus dem Verbindungsmaterialreservoir, wobei die Vereinzelungseinrichtung als Fördereinrichtung zur vereinzelten Übergabe von Verbindungsmaterialdepots an die Applikationseinrichtung ausgebildet ist,
dadurch **gekennzeichnet**,
daß die Vereinzelungseinrichtung (12) als Kreisfördereinrichtung (20) ausgebildet ist.

2. Vorrichtung nach Anspruch 1,
dadurch **gekennzeichnet**,
daß die Vereinzelungseinrichtung (12) entsprechend der Größe der zu vereinzelnden Verbindungsmaterialdepots ausgebildete Transportaufnahmen (25) aufweist, die von einer Aufnahmeposition (28) zur vereinzelten Aufnahme von Verbindungsmaterialdepots (30) aus dem Verbindungsmaterialreservoir (11) in eine Abgabeposition (29) zur Abgabe der Verbindungsmaterialdepots an die Applikationseinrichtung (13; 46) bewegbar sind.

3. Vorrichtung nach einem der vorangehenden Ansprüche,
dadurch **gekennzeichnet**,
daß die Vereinzelungseinrichtung (12) und die Applikationseinrichtung (13; 46) zu einer baulichen Einheit zusammengefaßt sind.

4. Vorrichtung nach einem der vorangehenden Ansprüche,
dadurch **gekennzeichnet**,
daß das Materialreservoir (11), die Vereinzelungseinrichtung (12) und die Applikationseinrichtung (13; 46) zu einer baulichen Einheit zusammengefaßt sind.

5. Vorrichtung nach einem der vorangehenden Ansprüche,
dadurch **gekennzeichnet**,
daß die Vereinzelungseinrichtung (12) als Scheibenförderer (20) ausgebildet ist mit einer entsprechend der Transportaufnahmenteilung (26) getaktet angetriebenen Förderscheibe (20).

6. Vorrichtung nach einem der vorangehenden Ansprüche,
dadurch **gekennzeichnet**,
daß die Verbindungsmaterialdepots (30) in ihrer Abgabeposition (29) in eine Applikationskapillare (23) überführt werden, die zur Plazierung des Verbindungsmaterialdepots (30) an einer Verbindungsstelle (37) dient.

7. Vorrichtung nach Anspruch 6,
dadurch **gekennzeichnet**,
daß zur Unterstützung der Überführung der jeweiligen Verbindungsmaterialdepots (30) in die Applikationskapillare (23) eine auf das Verbindungsmaterialdepot wirkende Druckgasbeaufschlagungseinrichtung (36) vorgesehen ist.

8. Vorrichtung nach einem der vorangehenden Ansprüche,
dadurch **gekennzeichnet**,
daß in Förderrichtung (27) der Vereinzelungseinrichtung (12) vor der Abgabeposition (29) ein Sensor (41) zur Detektierung von Verbindungsmaterial angeordnet ist.

9. Vorrichtung nach Anspruch 8,
dadurch **gekennzeichnet**,
daß in Förderrichtung der Vereinzelungseinrichtung (12) hinter der Abgabeposition (29) ein Sensor (42) zur Detektierung von Verbindungsmaterial angeordnet ist.

10. Vorrichtung nach einem der vorangehenden Ansprüche,
dadurch **gekennzeichnet**,
daß die Applikationseinrichtung (13; 46) mit einer Energieeinrichtung zur Erzeugung der für eine Verbindung eines Verbindungsmaterialdepots (30) mit der Verbindungsstelle (37) notwendigen Energie verbunden ist, die in Abhängigkeit von dem durch die Druckgasbeaufschlagungseinrichtung (36) bewirkten Gasdruck ausgelöst wird.

11. Vorrichtung nach einem der vorangehenden Ansprüche,
dadurch **gekennzeichnet**,
daß die Applikationseinrichtung (13; 46) zur Verbindung mit einer Laserquelle zur Erzeugung der für eine Verbindung eines Verbindungsmaterialdepots (30) mit der Verbindungsstelle (37) notwendigen Energie eine in die Applikationskapillare (23) mündende Lichtleitfaser (24) aufweist.

12. Vorrichtung nach einem der vorangehenden Ansprüche,
dadurch **gekennzeichnet**,
daß zur Überführung eines Verbindungsmaterialdepots (30) aus der Abgabeposition (29) in die Applikationskapillare (47) eine schräg nach unten verlaufende Zuführkapillare (48) vorgesehen ist.

## Claims

1. Device for the singled-out application of joining material deposits, particularly solder beads, from a joining material reservoir with an application device and a singling-out device for singling-out joining material deposits from the joining material reservoir, wherein the singling-out device is designed as a conveying device for the singled-out transfer of joining material deposits to the application device, characterized in that the singling-out device (12) is designed as a circular conveying device (20).

2. Device according to Claim 1, characterized in that the singling-out device (12) has transport uptake devices (25) designed according to the size of the joining material deposits to be singled-out, which uptake devices are movable from an uptake position (28) for the singled-out uptake of joining material deposits (30) from the joining material reservoir (11) into a discharge Position (29) for discharging the joining material deposits to the application device (13; 46).

3. Device according to one of the preceding Claims, characterized in that the singling-out device (12) and the application device (13; 46) are combined to form a structural unit.

4. Device according to one of the preceding Claims, characterized in that the material reservoir (11), the singling-out device (12) and the application device (13; 46) are combined to form a structural unit.

5. Device according to one of the preceding Claims, characterized in that the singling-out device (12) is designed as a disk conveyor (20) with a conveyor disk (20) driven in pulsed manner corresponding to the transport uptake device pitch (26).

6. Device according to one of the preceding Claims, characterized in that the joining material deposits (30) in their discharge position (29) are transferred into an application capillary (23) which serves to place the joining material deposit (30) at a joint (37).

7. Device according to Claim 6, characterized in that a compressed gas application device (36) acting on the joining material deposit is provided to support the transfer of the particular joining material deposits (30) into the application capillary (23).

8. Device according to one of the preceding Claims, characterized in that a sensor (41) for detecting joining material is arranged in the direction of conveyance (27) of the singling-out device (12) in front of the discharge position (29).

9. Device according to Claim 8, characterized in that a sensor (42) for detecting joining material is arranged in the direction of conveyance of the singling-out device (12) behind the discharge position (29).

10. Device according to one of the preceding Claims, characterized in that the application device (13; 46) is connected to an energy device for generating the energy required to join a joining material deposit (30) to the joint (37), which energy device is triggered as a function of the gas pressure created by the compressed gas application device (36).

11. Device according to one of the preceding Claims, characterized in that to connect to a laser source to generate the energy required for a connection of a joining material deposit (30) to the joint (37), the application device (13; 46) has an optical fibre (24) opening into the application capillary (23).

12. Device according to one of the preceding Claims, characterized in that to transfer a joining material deposit (30) from the discharge position (29) into the application capillary (47), a feed capillary (48) running downwards in inclined manner is provided.

## Revendications

1. Dispositif pour l'application séparée de dépôts de matière d'assemblage, en particulier de globules de brasage, provenant d'un réservoir de matière d'assemblage, comportant un dispositif d'application et un dispositif de séparation pour la séparation de dépôts d'une matière d'assemblage provenant du réservoir de matière d'assemblage, le dispositif de séparation étant réalisé en tant que dispositif de convoyage pour le transfert séparé de dépôts de matière d'assemblage au dispositif d'application,
caractérisé
en ce que le dispositif de séparation (12) est réalisé en tant que dispositif de convoyage circulaire (20).

2. Dispositif selon la revendication 1,
caractérisé
en ce que le dispositif de séparation (12) présente des logements de transport (25) réalisés suivant la taille des dépôts de matière d'assemblage à séparer, logements qui sont déplaçables à partir d'une position de réception (28) pour la réception séparée de dépôts de matière d'assemblage (30) provenant du réservoir de matière d'assemblage (11) dans une position de distribution (29) pour la distribution des dépôts de matière d'assemblage au dispositif d'application (13 ; 46).

3. Dispositif selon l'une des revendications précédentes,
caractérisé
en ce que le dispositif de séparation (12) et le dispositif d'application (13 ; 46) sont réunis en une unité de construction.

4. Dispositif selon l'une des revendications précédentes,
caractérisé
en ce que le réservoir de matière (11), le dispositif de séparation (12) et le dispositif d'application (13 ; 46) sont réunis en une unité de construction.

5. Dispositif selon l'une des revendications précédentes,
caractérisé
en ce que le dispositif de séparation (12) est réalisé en tant que convoyeur à disque, avec un disque de convoyage (20) entraîné de manière synchronisée en fonction de la division des logements de transport (26).

6. Dispositif selon l'une des revendications précédentes,
caractérisé
en ce que les dépôts de matière d'assemblage (30) dans leur position de distribution (29) sont transférés dans un tube capillaire d'application (23), qui sert à placer le dépôt de matière d'assemblage (30) en un emplacement d'assemblage (37).

7. Dispositif selon la revendication 6,
caractérisé
en ce que pour favoriser le transfert des différents dépôts de matière d'assemblage (30) dans le tube capillaire d'application (23) il est prévu un dispositif d'alimentation en gaz comprimé (36) agissant sur le dépôt de matière d'assemblage.

8. Dispositif selon l'une des revendications précédentes,
caractérisé
en ce que devant la position de distribution (29), dans le sens de transport (27) du dispositif de séparation (12), est prévu un capteur (41) pour la détection de la matière d'assemblage.

9. Dispositif selon la revendication 8,
caractérisé
en ce que derrière la position de distribution (29), dans le sens de transport du dispositif de séparation (12), est prévu un capteur (42) pour la détection de la matière d'assemblage.

10. Dispositif selon l'une des revendications précédentes,
caractérisé
en ce que le dispositif d'application (13 ; 46) est relié à un dispositif énergétique destiné à produire l'énergie nécessaire à l'assemblage d'un dépôt de matière d'assemblage (30) avec l'emplacement d'assemblage (37), qui est déclenché en fonction de la pression de gaz provoquée par le dispositif d'alimentation en gaz comprimé (36).

11. Dispositif selon l'une des revendications précédentes,
caractérisé
en ce que le dispositif d'application (13 ; 46) présente, pour la liaison avec une source laser destinée à produire l'énergie nécessaire à l'assemblage d' un dépôt de matière d'assemblage (30) avec l'emplacement d'assemblage (37), une fibre optique (24) débouchant dans le tube capillaire d'application (23).

12. Dispositif selon l'une des revendications précédentes,
caractérisé
en ce que pour le transfert d'un dépôt de matière d'assemblage (30) à partir de la position de distribution (29) dans le tube capillaire d'application (47), il est prévu un tube capillaire d'alimentation (48) s'étendant obliquement vers le bas.
